# EUROPEAN PATENT APPLICATION

(11) **EP 4 523 778 A1**
(43) Date of publication of application: **19.03.2025**
(21) Application number: 23197832.1
(22) Date of filing: 18.09.2023
(51) Int. Cl.: B01D 67/00, B01D 69/12, B01D 69/10

(54) **A MEMBRANE COMPOSITE AND A METHOD OF PRODUCING A MEMBRANE COMPOSITE**

(71) Applicant: MANN+HUMMEL LIFE SCIENCES & ENVIRONMENT HOLDING SINGAPORE PTE. LTD., Singapore 139234 (SG)
(72) Inventor: POWER, Joseph, 70734 Fellbach (DE); ROBERTS, Erin, Arden, NC, 29704 (US)
(74) Representative: Mann + Hummel Intellectual Property

(57) **Abstract**

The present invention provides a membrane composite including at least two 3D-printed layers extending in an x-y plane and including a first plurality of interlaced strands forming a first plurality of interstitial spaces defined by first inner surfaces of the interlaced strands; and a polymeric coating coated on a surface of the at least two 3D-printed layers and on the first inner surfaces of the first plurality of interstitial spaces to form pores, wherein the polymeric coating is adapted for wastewater filtration; and a method of producing the membrane composite.

## Description

### Technical Field

The invention relates to a membrane composite including at least two 3D-printed layers and to a method of producing the membrane composite including at least two 3D-printed layers.

### Background Art

Conventional membrane composites for wastewater treatment generally consist of a backing layer, which is configured to provide rigidity, and a membrane disposed on a surface of the backing layer. The membrane may have pores that act as a filter, and may be disposed facing the wastewater. Problems encountered in such conventional membrane composites involve irregular pore sizes. The irregular pore size is a problem particularly for wastewater treatment, since the largest pore typically determines the degree of filtration. A further problem encountered in conventional membrane composites is delamination of the membrane from the backing layer.

Moreover, the production of such a conventional membrane composite may involve several process steps of first producing parts of the membrane individually including attachment of the membrane to the backing layer, followed by assembling the parts to produce the membrane composite. Such a step-heavy approach may decrease efficiency and waste manpower.

It is therefore an object to provide for an improved membrane composite and an improved method of producing the membrane composite.

### Summary

In a first aspect, there is provided membrane composite including: at least two 3D-printed layers extending in an x-y plane and including a first plurality of interlaced strands forming a first plurality of interstitial spaces defined by first inner surfaces of the interlaced strands; and a polymeric coating coated on a surface of the at least two 3D-printed layers and on the first inner surfaces of the first plurality of interstitial spaces to form pores, wherein the polymeric coating is adapted for wastewater filtration.

According to various embodiments, the distance between two adjacent strands of a layer of the at least two 3D-printed layers is about 0.025 mm to about 1 mm.

According to various embodiments, strands of a first 3D-printed layer of the at least two 3D-printed layers may be in parallel alignment and extend in a first direction of the x-y plane. Strands of a second 3D-printed layer of the at least two 3D-printed layers may be in parallel alignment and extend in a second direction of the x-y plane. The first 3D-printed layer may be stacked on the second 3D-printed layer in a z-direction. The first direction and the second direction may be at an angle of greater than 0 and less than 180 degrees to each other.

According to various embodiments, the at least two 3D-printed layers may include a third 3D-printed layer including strands in parallel alignment and stacked on the second 3D-printed layer in the z-direction. The third 3D-printed layer may extend in the first direction of the x-y plane and may be offset from the first 3D-printed layer.

According to various embodiments, the first plurality of interstitial spaces comprises interstitial spaces formed by the first 3D-printed layer and the second 3D-printed layer which may be diagonally shifted from interstitial spaces formed by the second 3D-printed layer and the third 3D-printed layer, thereby creating a diagonally shifted pore pattern.

According to various embodiments, the at least two 3D-printed layers may further include an undercoating disposed between the first plurality of interlaced strands and the polymeric coating. The undercoating may be configured to promote adhesion between the first plurality of interlaced strands and the polymeric coating.

According to various embodiments, the membrane composite includes a further at least two 3D-printed layers including a first plurality of interlaced strands forming a first plurality of interstitial spaces, wherein the further at least two 3D-printed layers are in a substantially parallel arrangement to the at least two 3D-printed layers, wherein the membrane composite may further include a 3D-printed spacer disposed between the at least two 3D-printed two layers and the further at least two 3D-printed layers, wherein the 3D-printed spacer may include a second plurality of interlaced strands forming a second plurality of interstitial spaces defined by second inner surfaces of the interlaced strands, wherein a distance between two adjacent strands of the 3D-printed spacer is larger than a distance between two adjacent strands of a layer of the at least two 3D-printed layers or the further at least two 3D-printed layers.

According to various embodiments, the membrane composite further may have at least one through-hole extending perpendicularly to the x-y plane. The membrane composite may further include at least one 3D-printed shock absorber connecting the at least two 3D-printed layers around edges partially defining the through-hole. The at least one 3D-printed shock absorber may thus be configured to secure the substantially parallel arrangement between the at least two 3D-printed layers.

According to various embodiments, the membrane composite may include at least one 3D-printed permeate outlet extending perpendicularly to the x-y plane formed by the at least two 3D-printed layers. The at least one 3D-printed permeate outlet may be configured to conduct cleaned water out of the membrane composite.

According to various embodiments, the at least two 3D-printed layers and the 3D-printed spacer and, if present, the at least one 3D-printed shock absorber and, if present, the at least one 3D-printed permeate outlet may be formed in a single printing operation.

According to various embodiments, a material of the at least two 3D-printed layers or, if present, a material of the first plurality of interlaced strands or, if present, a material of the 3D-printed spacer or, if present, the at least one 3D-printed shock absorber may include a polyester; and a material of the polymeric coating may include a polysulfone.

In another aspect, there is provided a method of producing a membrane composite, the method including a first step of 3D printing a 3D-printed structure, wherein the 3D-printed structure may include at least two 3D-printed layers including a first plurality of interlaced strands forming a first plurality of interstitial spaces defined by first inner surfaces of the interlaced strands; and a second step of coating a surface of the 3D-printed structure and the first inner surfaces of the first plurality of interstitial spaces with a polymeric coating solution and allowing the polymeric coating solution to form a polymeric coating including a plurality of pores, wherein the polymeric coating is adapted for wastewater filtration.

According to various embodiments, the 3D printing may include fuse deposition modeling.

According to various embodiments, i) the 3D printing may include selecting a distance between two adjacent strands of a layer based on predetermined data selected from properties of the polymeric coating solution, parameters of the second step of coating, or combinations thereof; and/or ii) the 3D printing may include selecting a surface area of the membrane composite based on predetermined properties of the interlaced strands.

According to various embodiments, the distance between two strands of the layer may be selected to be about 0.025 mm to about 1 mm when the viscosity of the polymeric coating solution is in a range of about 1000 to 1500 mPas.

According to various embodiments, the 3D-printed structure may include a further at least two 3D-printed layers including a first plurality of interlaced strands forming a first plurality of interstitial spaces, wherein the further at least two 3D-printed layers are in a substantially parallel arrangement to the at least two 3D-printed layers, wherein the 3D printing further may include 3D printing a spacer on the at least two 3D-printed layers and 3D printing the further at least two 3D-printed layers on the 3D-printed spacer, wherein the 3D-printed spacer may include a second plurality of interlaced strands forming a second plurality of interstitial spaces defined by second inner surfaces of the interlaced strands, wherein a distance between two adjacent strands of the 3D-printed spacer may be larger than a distance between two adjacent strands of a layer of the at least two 3D-printed layers or the further at least two 3D-printed layers.

According to various embodiments, the 3D-printed structure may include at least one 3D-printed permeate outlet extending perpendicularly to a plane formed by the at least two 3D-printed layers. The at least one 3D-printed permeate outlet may be configured to conduct cleaned water out of the membrane composite.

### Brief Description of Drawings

The drawings show:
- FIG. 1A: is a top view of the membrane composite according to various embodiments.
- FIG. 1B: is an enlarged top view of the membrane composite according to various embodiments.
- FIG. 1C: is an enlarged top view of the membrane composite according to various embodiments.
- FIG. 1D: is a scanning electron microscope (SEM) image illustrating various aspects of the membrane composite.
- FIG. 1E: is a side view of the membrane composite according to various embodiments.
- FIG. 1F: is a SEM image illustrating various aspects of the membrane composite.
- FIG. 1G: is a SEM image illustrating various aspects of the membrane composite.
- FIG. 1H: is a SEM image illustrating various aspects of the membrane composite.
- FIG. 1I: is a SEM image illustrating various aspects of the membrane composite.
- FIG. 1J: is a graph illustrating a flow rate of the membrane composite in correlation with a pore size.
- FIG. 1K: is a SEM image illustrating various aspects of the membrane composite.
- FIG. 1L: is a SEM image illustrating various aspects of the membrane composite.
- FIG. 2A: is a perspective view of the membrane composite according to various embodiments.
- FIG. 2B: is a perspective view of the membrane composite according to various embodiments.
- FIG. 2C: is an enlarged side view of the membrane composite according to various embodiments.
- FIG. 2D: is an enlarged side view of the membrane composite according to various embodiments.
- FIG. 3: is an image illustrating various aspects of the membrane composite.
- FIG. 4: is a top view of the membrane composite according to various embodiments.
- FIG. 5: is a top view of the membrane composite according to various embodiments.
- FIG. 6: is a simplified flow diagram for an exemplary process according to an aspect of the method of producing a membrane composite.
- FIG. 7A: is a SEM image illustrating various aspects of the method for producing the membrane composite.
- FIG. 7B: is a SEM image illustrating various aspects of the method for producing the membrane composite.

### Detailed Description

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Embodiments described in the context of one of a membrane composite are analogously valid for a method of producing a membrane composite.

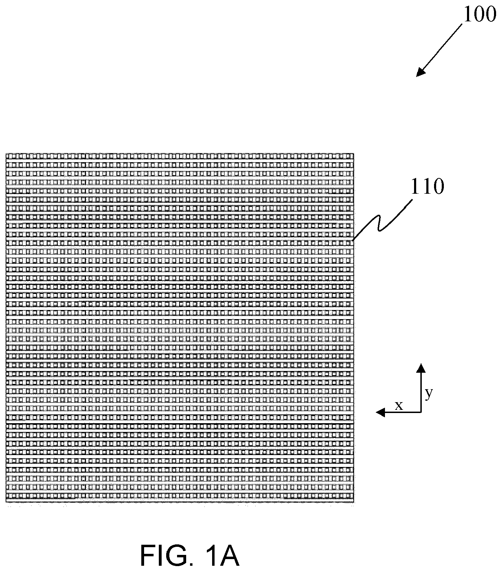

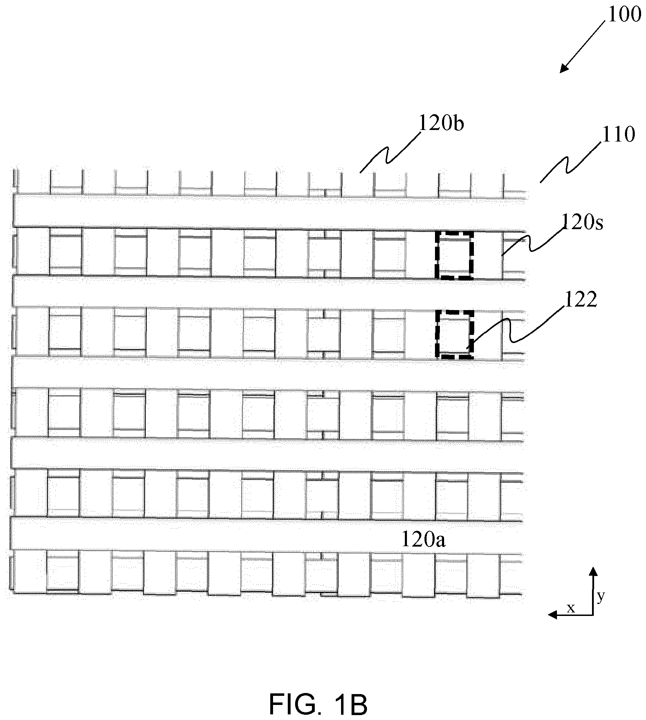

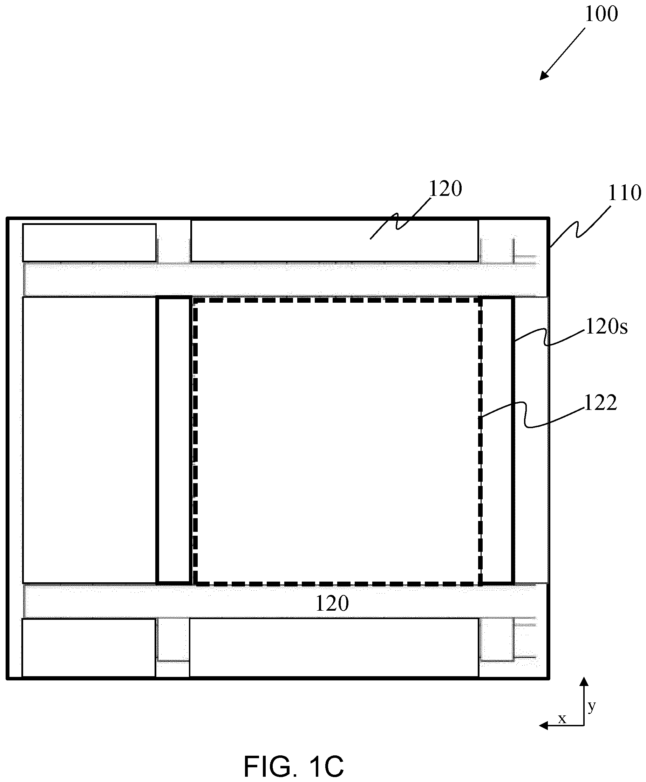

FIG. 1A, FIG. 1B and FIG. 1C show a membrane composite 100 including at least two 3D-printed layers 110 in a top view (FIG. 1A), an enlarged top view (FIG. 1B) and a further enlarged view (FIG. 1C). The at least two 3D-printed layers 110 may extend in an x-y plane. In particular, a first 3D-printed layer may extend in one direction x. A second 3D-printed layer may extend in a direction y. The second 3D-printed layer may be stacked on the first 3D-printed layer in a direction z. The at least two 3D-printed layers 110 may have two surfaces, wherein one of the two surfaces may be configured for an inflow of wastewater and the other side may be configured for an outflow of clean water.

As shown in FIG. 1B and FIG. 1C (enlarged views of FIG. 1A), the at least two 3D-printed layers 110 may include a first plurality of interlaced strands 120 forming a first plurality of interstitial spaces 122 defined by first inner surfaces 120s of the interlaced strands 120. In other words, the interlaced strands 120 allow for cavities within an interlaced network, wherein the first inner surfaces 120s of the interlaced strands 120 form the boundaries of such cavities. "Interlaced strands", as used herein, refer to more than one 3D-printed strand that is used as a substantially fixed permanent structural member to form the at least two layers 110. The more than one 3D-printed strand may extend in the x-y plane and be disposed in an angle, either to each other or the strands themselves are disposed in an angled manner, such that they intersect or create cross-sections, i.e. they are interlaced. For example, the interlaced strands 120 of the at least two 3D-printed layers 110 may form a grid.

The first plurality of interstitial spaces 122 defined by the inner surfaces 120s of the first plurality of interlaced strands 120 may be substantially regular, meaning that they may define substantially regular volumes (e.g., +/- 20% deviation, or +/- 10% deviation). In other words, the at least two 3D-printed layers 110 may form a substantially uniform grid with substantially uniform interstitial spaces 122 (i.e., cavities) defined by the boundaries of said grid. Said uniformity (e.g., regularity) may be enabled through a 3D printing method for obtaining the at least two 3D-printed layers 110.

A polymeric coating may be coated on one of the surfaces of the at least two 3D-printed layers, e.g., on the surface that faces the raw water. In addition, the polymeric coating may be coated on the first inner surfaces 120s of the first plurality of interstitial spaces 122. The polymeric coating may be coated on a surface of the at least two 3D-printed layers 110 and on the first inner surfaces 120s of the first plurality of interstitial spaces (122) to form pores. Thus, the polymeric coating may be interconnected with the at least two 3D-printed layers 110, and therefore differs from a conventional "surface coating". The polymeric coating may coat the at least two 3D-printed layers 110 and cover the first plurality of interstitial spaces 122, leaving only the pores of the polymeric coating to conduct filtration. Due to the uniformity of the first plurality of interstitial spaces 122 formed by the at least two 3D-printed layers, advantageously, a structure of the pores created by the polymeric coating is more uniform due to the uniformity of the first plurality of interlaced strands 120 that are enabled by the 3D printing method.

The polymeric coating may also be adapted for wastewater filtration. "Adapted for wastewater filtration" as used herein may refer to the polymeric coating including pores that are suitable for the removal of impurities from the wastewater. For example, the membrane composite may be part of a membrane bioreactor, and the filtration process may be selected from microfiltration, ultrafiltration, nanofiltration, etc. An average pore size of the pores may be about 0.1 nm to about 10 µm, or about 0.1 nm to about 1 µm, or about 0.1 nm to about 100 nm, or about 0.1 nm to about 5 nm, or about 100 nm to about 10 µm, or about 1 µm to about 10 µm, which may be measured using a variety of techniques, e.g., according to ASTM-F-316-80.

Advantageously, due to the reasons mentioned above, the average pore size in the membrane composite 100 is more regular, i.e., the deviation of individual pore sizes from the average pore size is decreased. The more regular pore size may be beneficial for the quality of the water filtration, and therefore provide for an improved membrane composite 100.

Moreover, since the polymeric coating is interconnected with the at least two 3D-printed layers 110, the adhesion between the polymeric coating and the at least two 3D-printed layers 110 is improved, which may help in preventing, or avoiding, delamination of the polymeric coating from the at least two 3D-printed layers 110.

In some embodiments, and as shown in FIG. 1B, the first plurality of interlaced strands 120 may include strands of a first 3D-printed layer 120a. The strands of said first 3D-printed layer 120a may be in parallel alignment extending in a first direction in the x-y plane. The first plurality of interlaced strands 120 may include strands of a second 3D-printed layer 120b. The strands of said second 3D-printed layer 120b may be in parallel alignment extending in a second direction in the x-y plane. The strands of the first 3D-printed layer 120a may be disposed on top of (e.g., stacked on) the strands of the second 3D-printed layer 120b in a z-direction such that they are overlaid to form cross-sections. The first direction and the second direction may be at an angle of greater than 0 and less than 180 degrees, preferably greater than 45 and less than 120 degrees, more preferably at an angle of about 90 degrees, to each other, e.g., to form cross-sections. The angled positioning of the strands of the first 3D-printed layer 120a and the second 3D-printed layer 120b to each other may be particularly useful for the stability of the at least two 3D-printed layers 110.

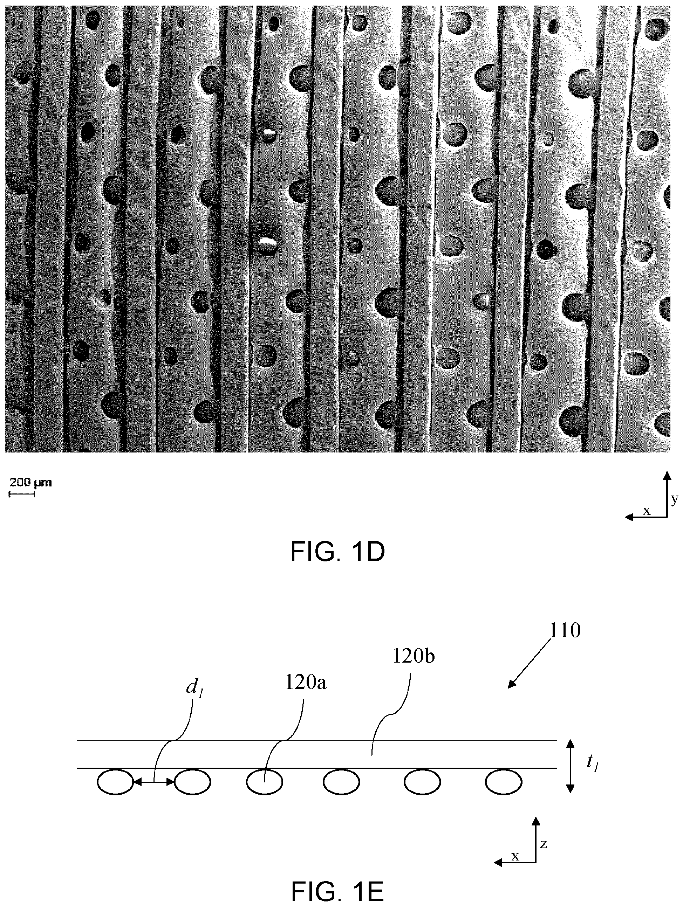

The arrangement of the strands of the first 3D-printed layer 120a and the strands of the second 3D-printed layer 120b may also have an effect on the pattern of the pores created in the polymeric coating. In some embodiments, strands of a third 3D-printed layer disposed on top of (e.g., stacked on) the second 3D-printed layer 120b in the z-direction may be arranged offset (e.g., parallelly displaced) from the first 3D-printed layer 120a. Strands of the third 3D-printed layer may be in parallel alignment with, but not directly on top of, strands of the first 3D-printed layer 120a. The first plurality of interstitial spaces 122 may comprise interstitial spaces formed by the first 3D-printed layer 120a and the second 3D-printed layer 120b, interstitial spaces formed by the second 3D-printed layer and the third 3D-printed layer, ..., and interstitial spaces formed by the (n-1)^{th} 3D-printed layer and the n^{th} 3D-printed layer. The interstitial spaces formed by the (n-2)^{th} 3D-printed layer and the (n-1)^{th} 3D-printed layer may be diagonally shifted from the interstitial spaces formed by the (n-1)^{th} 3D-printed layer and the n^{th} 3D-printed layer. Since the interstitial spaces would be diagonally shifted, the polymeric coating within these interstitial spaces would also be diagonally shifted. The result of such a pattern of interstitial spaces may be a diagonally shifted pore pattern. This is illustrated in FIG. 1D, showing that the pores are in an alternate, zig-zag pattern, which is advantageous for the creation of homogenous drainage of raw water through the membrane composite 100.

As shown in FIG. 1E, the at least two 3D-printed layers 110 may have a thickness *t₁* in a direction z which is perpendicular to the two directions x and y in which the 3D-printed layers extend. The thickness *t₁* may be about 30 µm to about 220 µm, or about 50 µm to about 200 µm, or about 70 µm to about 150 µm. The thickness *t₁* may optionally include the thickness of an undercoating described herein at a later stage. The distance *d₁* between two adjacent strands of a layer of the at least two 3D-printed layers 110 may be about 0.025 mm to about 1 mm, or about 0.05 mm to about 0.5 mm, or about 0.05 mm to about 0.3 mm, or about 0.05 mm to about 0.1 mm.

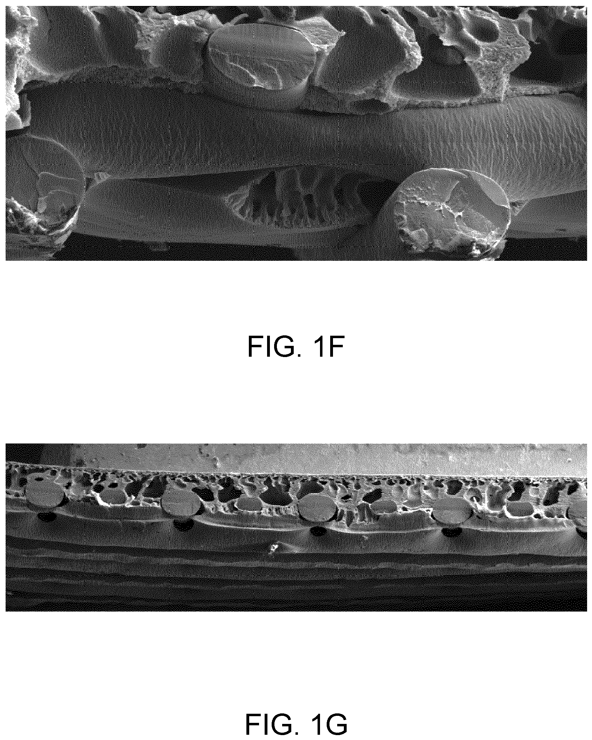

The thickness of each strand of the at least two 3D-printed layers 110 may vary depending on its position in relation to a strand on which it is disposed. This is illustrated, for example, in FIG. 1F and FIG. 1G. In FIG. 1F, one strand of a first 3D-printed layer (shown as extending from right to left) is disposed on two strands of a second 3D-printed layer (shown directly beneath and substantially perpendicularly disposed to the strand of the first 3D-printed layer). During the 3D printing process of one strand of the first 3D-printed layer on the second 3D-printed layer, the 3D printing material for the one strand of the first 3D-printed layer is extruded through a printhead in a perpendicular direction to two adjacent strands of the second 3D-printed layer. As the 3D printing material for the one strand of the first 3D-printed layer is extruded/dragged past a strand of the second 3D-printed layer that is substantially perpendicular to it, the surface tension of the strand of the second 3D-printed layer causes the strand of the first 3D-printed layer to be thinner, then thicker as the printhead continues to extrude more 3D printing material, until the strand of the first 3D-printed layer reaches the next perpendicular strand of the second 3D-printed layer, and the pattern repeats. While not fully understood, it is believed that a polymeric coating that is applied to these at least two 3D-printed layers with varying strand thickness will result in larger pores on a thicker part of the strand, while resulting in smaller pores on a thinner part of the strand creates. The pore pattern can thus be described as a regular pattern of large and small pores, depending on the position of the pore in relation to a corresponding strand thickness. It should be noted that while the pore pattern is described herein as including large and small pores, the dimensions of these pore size deviations are considered to be of no particular impact on the general observation that the membrane composite 100 as described herein generally produces a uniform pore size, that has been described further above.

In some embodiments, the above described larger and smaller pores may be arranged in the before described diagonally shifted pore pattern (see, description in relation to FIG. 1D). In such embodiments, the larger and smaller pores may be arranged in regular intervals in this diagonally shifted pore pattern. For example, and with reference to FIG. 1D, the polymeric coating may have a zig-zag pattern of large and small pores, wherein typically the larger pores are positioned on one side of the polymeric coating that is disposed between two adjacent strands, while the smaller pores are positioned on an opposite side of the same polymeric coating.

A material of the at least two 3D-printed layers 110 may include any polymer suitable for 3D-printing, in particular a thermoplastic polymer. Examples of such a thermoplastic polymer may include polyethylene, polypropylene, polystyrene, styrene-ethylene-butylene-styrene copolymer, polyester, polyvinyl chloride, polyvinylidene fluoride, polyamide, polytetrafluoroethylene, polylactic acid, polybenzimidazole, polycarbonate, polyether sulfone, polyoxymethylene, polyether ether ketone, polyetherimide, polyphenylene oxide, polyphenylene sulphide or a combination thereof. In some embodiments, the polyethylene may include a low-density polyethylene (LDPE), a linear low density polyethylene (LLDPE), a high density polyethylene (HDPE), an ultra-high-molecular-weight polyethylene, or a combination thereof. In some embodiments, the thermoplastic polymer may be a polyester, for example, polybutylene terephthalate and/or polyethylene terephthalate (PET).

The polymeric coating may be an active membrane, meaning that it may be a porous polymeric material. A porous polymeric material may be obtained by providing a polymeric coating solution (e.g., a membrane solution) and effecting a phase inversion, meaning that a method step may enable the formation of pores. These pores may be suitable for the removal of impurities during filtration of wastewater. The polymeric material that may be used for the polymeric coating to form an active membrane material may include an organic polymer material, in particular, polyethylene, polypropylene, polystyrene, styrene-ethylene-butylene-styrene copolymer, polyester, polyvinyl chloride, polyamide, polyacrylonitrile, polyvinylidene fluoride, polysulfone, or a combination thereof. In a preferred embodiment, the polymeric coating may include, or consist of, polyether sulfone.

In a preferred embodiment, the material from which the at least two 3D-printed layers 110 are made from may be a polyester, e.g., PET, and the material from which the polymeric coating is made from may be a polysulfone, e.g., polyether sulfone. In this embodiment, the material of the at least two 3D-printed layers 110 may engage into a particularly synergistic attractive interaction with the polymeric coating, and thus improves the adhesion between the two materials. An improved adhesion, in turn, may be beneficial to prevent delamination of the polymeric coating from the at least two 3D-printed layers 110.

In some embodiments, the adhesion may also be improved by disposing an undercoating between the first plurality of interlaced strands 120 and the polymeric coating. Such an undercoating may also be referred to as a sacrificial layer, or a mechanical encapsulation layer, which may improve adhesion by increasing a surface area between the first plurality of interlaced strands 120 and the polymeric coating. In other words, the at least two 3D-printed layers 110 may further include an undercoating. The undercoating may include one or more undercoating layers. The undercoating may be disposed on the surface of the first plurality of interlaced strands 120 that is configured to face the raw water. The polymeric coating that is coated on and within the first plurality of interlaced strands 120 would thus be coated on a surface of the undercoating that is configured to face the raw water. The undercoating may be disposed adjacent to the polymer coating.

In some embodiments, the undercoating may also be 3D-printed. In particular, the undercoating may include a plurality of undercoating strands. This plurality of undercoating strands may, similarly to the strands of the at least two 3D-printed layers 120a, 120b, be in a parallel alignment extending in a direction of an x-y plane, herein referred to as an undercoating parallel alignment extending in an undercoating direction. The plurality of undercoating strands may be stacked on a surface of the first plurality of interlaced strands 120 (e.g., on a surface of the strands of the first 3D-printed layer 120a) in the z-direction. The undercoating direction of the undercoating parallel alignment and the direction of the strands facing the undercoating (e.g., the first direction of the strands of the first 3D-printed layer 120a) may be at an angle of greater than 0 and less than 180 degrees to each other. In other words, the undercoating direction may be displaced at an angle from a direction of the plurality of undercoating strands. Similar to the description of the strands of the 3D-printed layers 120a, 120b, the undercoating strands may be stacked on the strands of layer 120a or 120b such that they are overlaid to form cross-sections. The undercoating strands and the strands of the layer 120a or 120b may therefore form interstitial spaces, termed as undercoating interstitial spaces.

In embodiments where the undercoating includes more than one undercoating layer, the arrangement of the undercoating strands of the more than one undercoating layer may also form undercoating interstitial spaces. These interstitial spaces may be defined by inner surfaces of the undercoating strands of the more than one undercoating layer. Hence, the polymeric coating may be coated on the surface of the undercoating (e.g., the surface facing the raw water) and on the inner surfaces of the undercoating interstitial spaces.

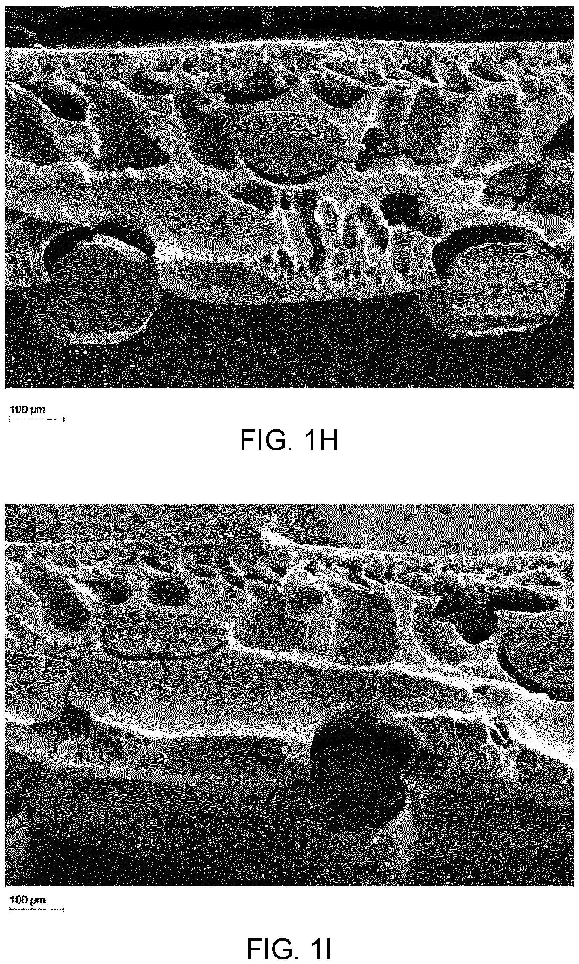

FIGS. 1H and 1I show an undercoating, which is 3D-printed, and includes at least one undercoating strand, for example, a cross-sectional view of an undercoating strand shown in the top center region of the SEM image. As shown in FIGS. 1H and 1I, a direction of the uppermost strand of the first plurality of interlaced strands 120 is disposed at an angle (e.g., perpendicularly displaced) from a direction of the undercoating strand. The polymeric coating is coated on the undercoating, e.g., on all surfaces of the undercoating. Since the polymeric coating (during the coating process) seeps through (e.g., penetrates) the undercoating, the polymeric coating therefore "encapsulates" the undercoating and discourages delamination. In particular, the polymeric coating, during the coating step, seeps through (e.g., penetrates) the undercoating interstitial spaces, and onto the first plurality of interlaced strands. Upon phase conversion during the coating process, pores are being formed in the polymeric coating, including in the undercoating interstitial spaces.

A material of the undercoating may be different from a material of the first plurality of interlaced strands. Alternatively, the same material may be used. A distance between adjacent undercoating strands may be different (e.g., smaller) from a distance of adjacent strands of the first plurality of interlaced strands. Accordingly, the undercoating interstitial spaces may have a different size (e.g., smaller) than a size of the first plurality of interstitial spaces. It follows, that the pore sizes of the undercoating may also be different (e.g., smaller) from a size of the pores formed within the first plurality of interstitial spaces. Advantageously, there is a beneficial effect on the filtration capacity of the membrane composite in embodiments wherein the pores of the undercoating are smaller and pores of the first plurality of interstitial spaces are larger. For example, the larger pores of the first plurality of interstitial spaces, compared with the smaller pores in the undercoating, provide better mechanical support and drainage, which results in increased flux. In other words, the channels for the wastewater to flow through become more open and regular.

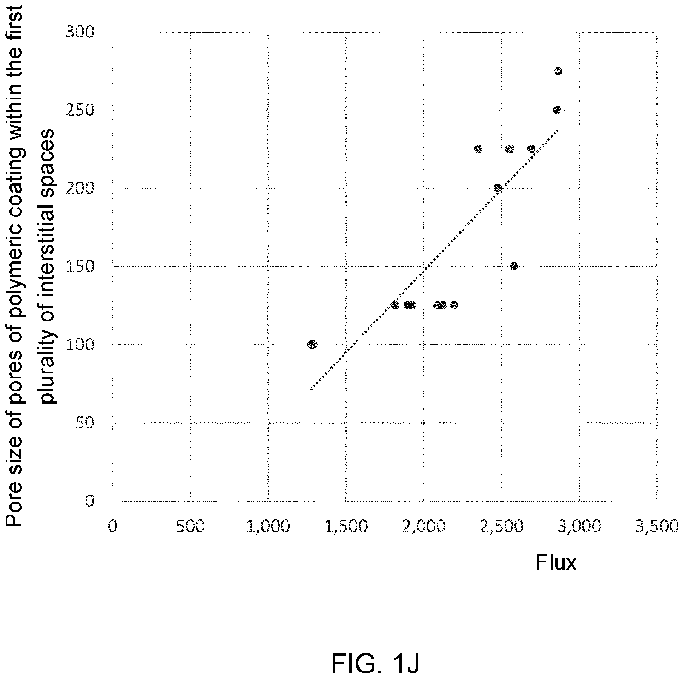

The correlation between the pore size and the flux is also illustrated in FIG. 1J. In particular, the pore size of the pores of the polymeric coating within the first plurality of interstitial spaces is indicated on the y-axis, while the flux of the wastewater, that is to be purified, is indicated on the x-axis. The graph in FIG. 1J shows that the flux increases in dependency with a larger pore size.

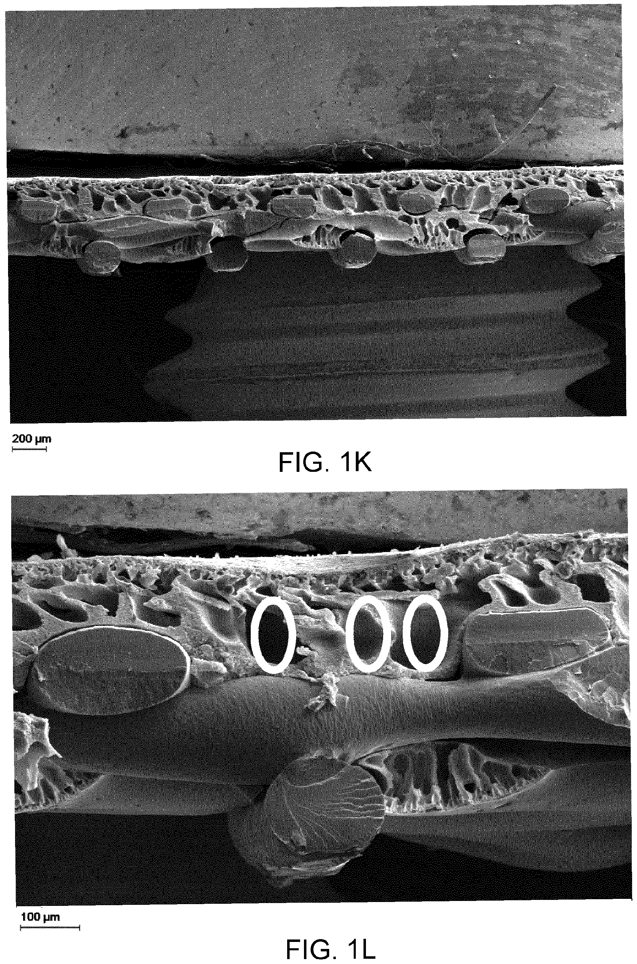

In some embodiments, the structure of the pores of the polymeric coating formed in the undercoating interstitial spaces are influenced by the homogeneous structure of the first plurality of interlaced strands, due to the direct proximity of the pores formed in the undercoating with the first plurality of interlaced strands. As illustrated in FIG. 1K and FIG. 1L, pores that are positioned at the interface of the undercoating with the first plurality of interlaced strands are in the form of "finger pores", meaning that they have an oval shape that is elongated in the z-axis. This particular structure of the pores results in an increased surface area for the pores at the interface between the undercoating and the first plurality of interlaced strands. The image also shows the 3-dimensional pleated effect of the pores within the at least two 3D-printed layers.

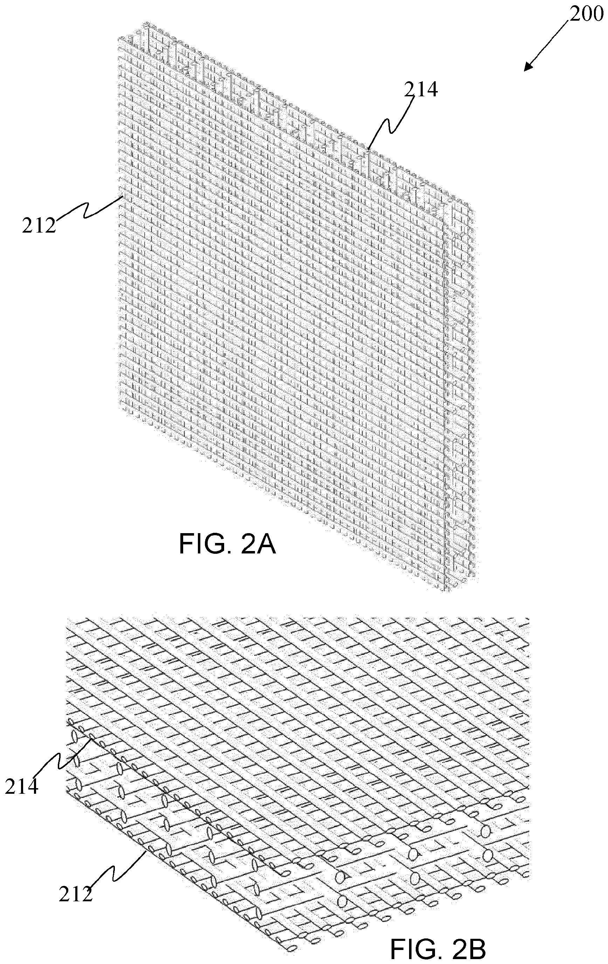

With reference to FIG. 2A and FIG. 2B, the membrane composite 200 may include at least two 3D-printed layers 212 and a further at least two 3D-printed layers 214, each 212, 214 including a first plurality of interlaced strands forming a first plurality of interstitial spaces, wherein the at least two 3D-printed layers 212 are in a substantially parallel arrangement to the further at least two 3D-printed layers 214. The at least two 3D-printed layers 212 and the further at least two 3D-printed layers 214 may be disposed at a distance from each other, such that a "sandwich" may be formed.

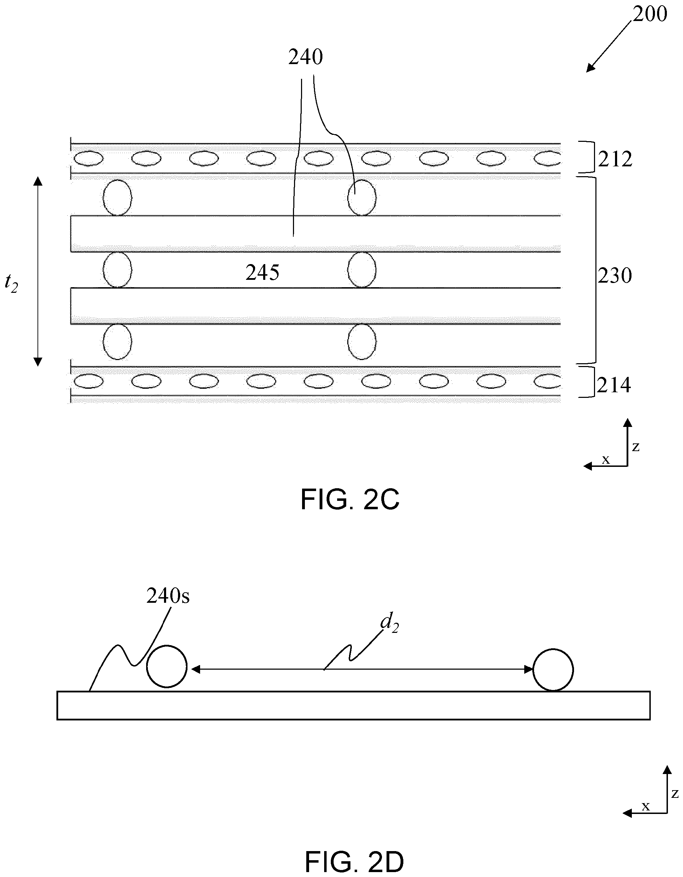

As shown in FIG. 2C and FIG. 2D, which is a side view of the membrane composite 200, the membrane composite 200 may further include a 3D-printed spacer 230 disposed between the at least two 3D-printed layers 212 and the further at least two 3D-printed layers 214. Similarly to the at least two 3D-printed layers 212 and the further at least two 3D-printed layers 214, the 3D-printed spacer 230 may include a second plurality of interlaced strands 240 forming a second plurality of interstitial spaces 245 defined by second inner surfaces 240s of the interlaced strands 240. However, the distribution of the strands in the 3D-printed spacer 230 may be less "dense" than in the at least two 3D-printed layers 212 and the further at least two 3D-printed layers 214. For example, a distance *d₂* between two adjacent strands of the 3D-printed spacer 230 may be larger than a distance *d₁* (shown in FIG. 1E) between two adjacent strands of a layer of the at least two 3D-printed layers 212 or the further at least two 3D-printed layers 214. This arrangement of strands in the 3D-printed spacer 230 may therefore enable the 3D-printed spacer 230 to function as a drainage for the cleaned water, after it passed the polymeric coating coated on the at least two 3D-printed layers 212 and/or the further at least two 3D-printed layers 214. Therefore, cleaned water collects in the spacer 230, in between the at least two 3D-printed layers 212 and the further at least two 3D-printed layers 214. The 3D-printed spacer may not include any polymeric coating coated thereon. A material of the 3D-printed spacer 230 may include all of the materials identified for the at least two 3D-printed layers 212 and the further at least two 3D-printed layers 214. In preferred embodiments, the 3D-printed spacer 230 may include the same material that is used for the at least two 3D-printed layers 212 and the further at least two 3D-printed layers 214.

As shown in FIG. 2C, the 3D-printed spacer 230 may have a thickness *t₂* in a direction z which is perpendicular to the two directions x and y in which the 3D-printed spacer 230 extends. The thickness *t₂* may be about 130 µm to about 820 µm, or about 150 µm to about 800 µm, or about 200 µm to about 500 µm.

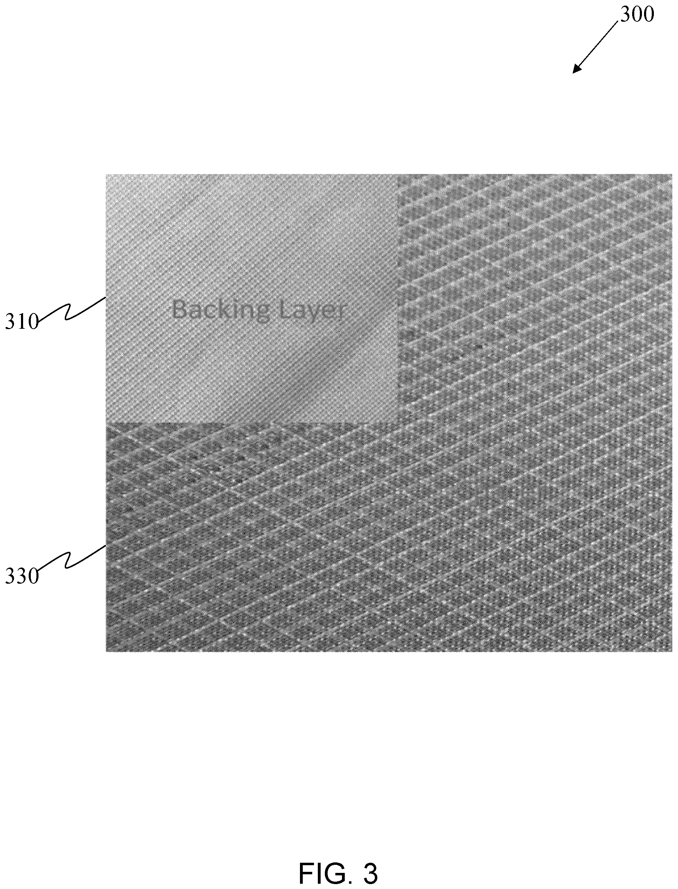

The difference in the distance *d₂* between two adjacent strands of the second plurality of interlaced strands 240 and the distance *d₁* (shown in FIG. 1E) between two adjacent strands of the first plurality of interlaced strands is also illustrated in a photograph, shown in FIG. 3. As illustrated in the photograph, the 3D-printed network of the at least two layers 310 appears much denser than the 3D-printed network of the 3D-printed spacer 330, which is due to the larger distance between two adjacent interlaced strands of the second plurality of interlaced strands compared to a distance between two adjacent interlaced strands of the first plurality of interlaced strands. As the polymeric coating is coated on the at least two layers 310, the at least two layers 310 is termed in FIG. 3 as the backing layer that supports the polymeric coating,

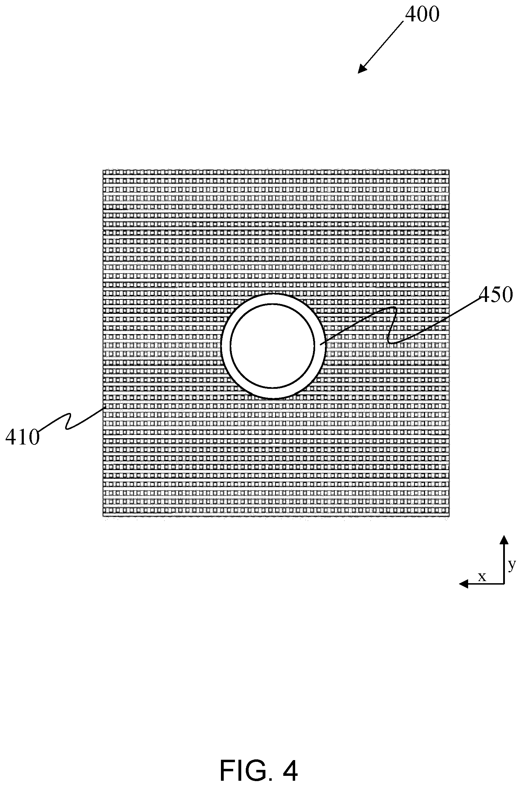

As shown in FIG. 4, the membrane composite 400 may include at least one 3D-printed permeate outlet 450 extending perpendicularly to the x-y plane formed by the at least two 3D-printed layers 410 and configured to collect the cleaned water (permeate) from the 3D-printed spacer and conduct the cleaned water out of the membrane composite 400. The at least one 3D-printed permeate outlet 450 may be in the form of a cylinder, that is in fluid connection with the 3D-printed spacer and outside of the membrane composite 400. The cylindrical permeate outlet may have an oval profile and may be termed a "permeate oval". A material of the at least one permeate outlet 450 may include all of the materials identified for the at least two layers 110. In preferred embodiments, the at least one permeate outlet 450 may include the same material that is used for the at least two layers 110. The membrane composite and the eventual system it is part of, e.g., a membrane bioreactor, are usually arranged to separate the permeate from the raw water. In prior arrangements of wastewater membranes, adhesives may be used to isolate the clean side of the membrane from the raw side of the membrane. For example, permeate outlets or permeate headers may be adhered to a membrane composite to remove the cleaned water. However, potential leakages of raw water into the permeate space may occur due to failures, e.g., from adhesives. Advantageously, because the 3D-printed permeate outlet 450 is integrally formed with the membrane composite, any potential leakages may be reduced or eradicated.

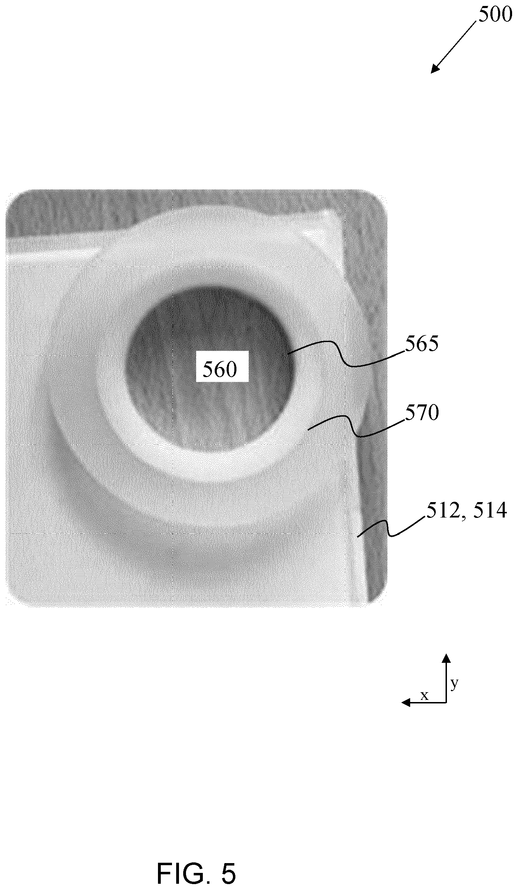

With reference to FIG. 5, a plurality of membrane composites 500 as disclosed herein may be stacked on each other or assembled in substantially parallel arrangement to each other to form a filter module. The filter module may comprise a frame to which the plurality of membrane composites is assembled. One or more than one membrane composites 500 may be assembled onto the frame. The frame may comprise securing means to secure the membrane composites 500 to the frame. In an embodiment, the securing means may be in the form of adhesives adhering the membrane composites 500 to the frame. In another embodiment, the securing means may be in the form of a clip, chain or other holding mechanism having an end attached to the frame and another end attached to the membrane composites 500. In yet another embodiment, the securing means may be in the form of at least one railing connected to the frame and on which the membrane composites 500 are mounted. The railing or chain may be inserted into a through-hole 560 bored into the membrane composite 500 to secure the membrane composites 500 to the frame. The securing means may hold adjacent membrane composites at a distance away from each other, so that the wastewater can access the polymeric coatings of all membrane composites in the filter module.

The plurality of membrane composites may be subject to stresses from its operating environment, such as from movement of the membrane composites of a membrane bioreactor in an aqueous environment. In particular, the through-hole 560 of the membrane composite 500 may tear from the mechanical stress. In some embodiments, through-hole 560 of membrane composite 500 may advantageously be reinforced by a shock absorber 570 that is configured to surround the bored edges of the through-hole 560. The shock absorber 570 may be concentrically arranged within the through-hole, in the form of e.g., a cylindrical ring within the through-hole. The shock absorber 570 may connect the at least two 3D-printed layers 512 and the further at least two 3D-printed layers 514 around the edges 565 of the through-hole 560 and may be configured to secure the substantially parallel arrangement between the at least two 3D-printed layers 512 and the further at least two 3D-printed layers 514. The shock absorber 570 may isolate or seal off the opening in the spacer caused by the through-hole 560, thereby separating the permeate from the raw water. Again, any potential leakages may be reduced or eradicated because the 3D-printed shock absorber 570 is integrally formed with the membrane composite. A material of the at least one 3D-printed shock absorber 570 may include all of the materials identified for the at least two layers 110. In preferred embodiments, the at least one 3D-printed shock absorber 570 may include the same material that is used for the at least two layers 110.

In a particularly preferred embodiment, the at least two 3D-printed layers 110, 212, 310 and the further at least two 3D-printed layers 214, 514, the 3D-printed spacer 230, optionally the at least one 3D-printed permeate outlet 450, and optionally the at least one 3D-printed shock absorber 570 are formed in a single printing operation to form a unitary 3D-printed structure. Advantageously, by forming a unitary 3D-printed structure including the at least two 3D-printed layers 110, 212, 310 and the further at least two 3D-printed layers 214, 514, the 3D-printed spacer 230, optionally the at least one 3D-printed permeate outlet 450, and optionally the at least one 3D-printed shock absorber 570, all of the structural components of the membrane composite 100, 200, 300, 400, 500 can be assembled in one single operation, and the polymer coating can be added to form the active membrane. Such a unitary 3D-printed structure obtained from one 3D printing operation may thus increase efficiency and save manpower.

In a second aspect, there is provided a method 600 of producing a membrane composite. The method may include a first step of 3D printing a 3D-printed structure, wherein the 3D-printed structure includes at least two layers including a first plurality of interlaced strands forming a first plurality of interstitial spaces defined by first inner surfaces of the interlaced strands. The method may include a second step of coating a surface of the 3D-printed structure and the first inner surfaces of the first plurality of interstitial spaces with a polymeric coating solution and allowing the polymeric coating solution to form a polymeric coating including a plurality of pores, wherein the polymeric coating is adapted for wastewater filtration.

Advantageously, the method of producing a membrane composite facilitates the assembly of all of the structural components of the membrane composite 100, 200, 300, 400, 500 in one single printing operation, before adding the polymeric coating solution to produce the polymer coating. Hence, the method as presented herein may increase efficiency and save manpower.

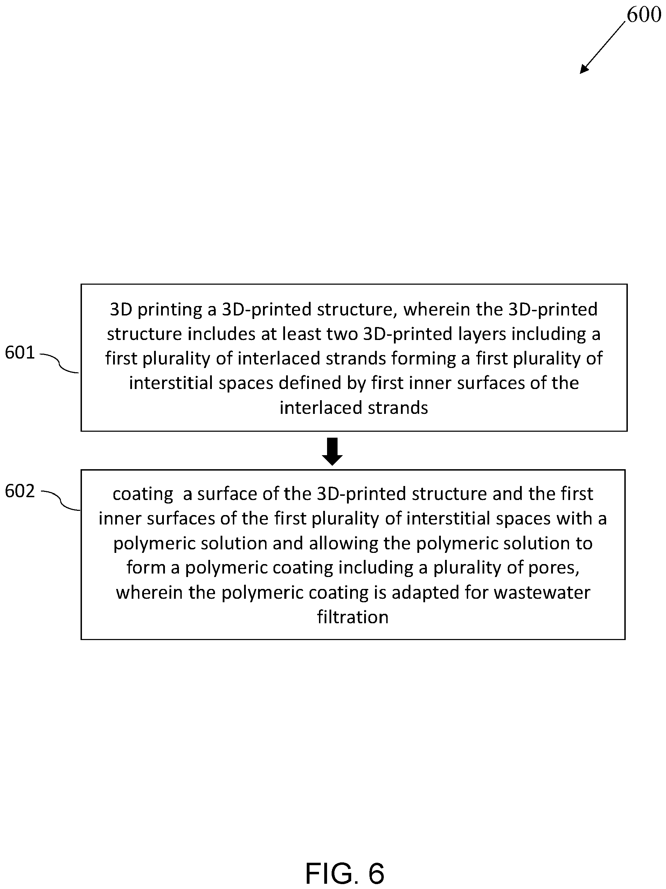

FIG. 6 shows a simplified flow diagram for an exemplary method 600 according to an aspect of the present method 600.

The operation 601 may be directed to 3D printing a 3D-printed structure, wherein the 3D-printed structure includes at least two 3D-printed layers including a first plurality of interlaced strands forming a first plurality of interstitial spaces defined by first inner surfaces of the interlaced strands.

The operation 602 may be directed to coating a surface of the 3D-printed structure and the first inner surfaces of the first plurality of interstitial spaces with a polymeric coating solution and allowing the polymeric coating solution to form a polymeric coating including a plurality of pores, wherein the polymeric coating is adapted for wastewater filtration.

In some embodiments, the 3D printing step may be carried out by using fuse deposition modeling (FDM). This may have the advantage that undesirable residues which arise from other printing methods may be eliminated or reduced. Undesirable residues that are left in the interstitial spaces may affect the pores of the polymeric coating, as the volume of the interstitial spaces may no longer be uniform. Thus, more randomized ranges of pore sizes and/or pores that would be too fine for wastewater filtration may be obtained in the polymeric coating. Another advantage of using FDM is the ability to use organic polymers, from which the 3D-printed structure is preferably made.

The polymeric coating solution may contain constituent polymers or monomers dissolved in an organic solvent, such as dimethylformamide (DMF), dimethyl sulfoxide (DMSO), N-methyl-2-pyrrolidone (NMP) or dimethylacetamide (DMAc). The polymeric coating solution may contain other chemical compounds that affect its viscosity. Components of the polymeric coating solution may be predetermined or determined prior to the first step of 3D printing.

Accordingly, in some embodiments, the 3D printing step may include selecting a distance between two adjacent strands of a layer based on predetermined data selected from properties of the polymeric coating solution, parameters of the second step of coating, or combinations thereof.

In one embodiment, a distance between two adjacent strands of the first plurality of interlaced strands may be selected based on the properties of the polymeric coating solution, to preferably form the polymeric coating on and within the first plurality of interlaced strands and not within the second plurality of interlaced strands if present. In embodiments, the properties of the polymeric coating solution include viscosity and shear rate of strain. In one embodiment, the viscosity of the polymeric coating solution may be in the range of 1000 mPas to 1500 mPas. As stated above, depending on the viscosity of the polymeric coating solution, the corresponding distance between adjacent strands may be selected. A less viscous solution may require a smaller distance between strands than when a more viscous solution is used. For example, for a viscosity of 1200 mPas, a distance between strands that is about 0.08 mm may be selected.

In another embodiment, a distance between two adjacent strands of the first plurality of interlaced strands may be selected based on the parameters of the second coating step. In embodiments, the parameters of the second step of coating include speed of coating and temperature. The parameters of the second step of coating may be predetermined or determined prior to the first printing step. The parameters of the coating step may influence the properties of the polymeric coating solution. Thus, the corresponding distance between adjacent strands may be selected accordingly.

Other properties of the polymeric coating solution and/or other coating parameters may be appreciated by those skilled in the art in order to select the corresponding distance between adjacent strands.

The distance between adjacent strands, in turn, may have an effect on the penetration ability of the polymeric coating solution into the interstitial spaces of the 3D-printed layers. The distance selected may achieve a desired penetration depth of the polymeric coating solution. The polymeric coating solution may penetrate the 3D-printed structure to coat the at least two 3D-printed layers, such as the undercoating where present. The distance between two adjacent strands may be selected such that the polymeric coating solution does not seep through (i.e., penetrate) to the 3D-printed spacer.

Additionally or alternatively, each strand's thickness may also have an effect on the penetration ability of the polymeric coating solution into the interstitial spaces of the at least two 3D-printed layers, such that penetration may be even prevented by increasing the surface tension or by increasing the thickness of the strand.

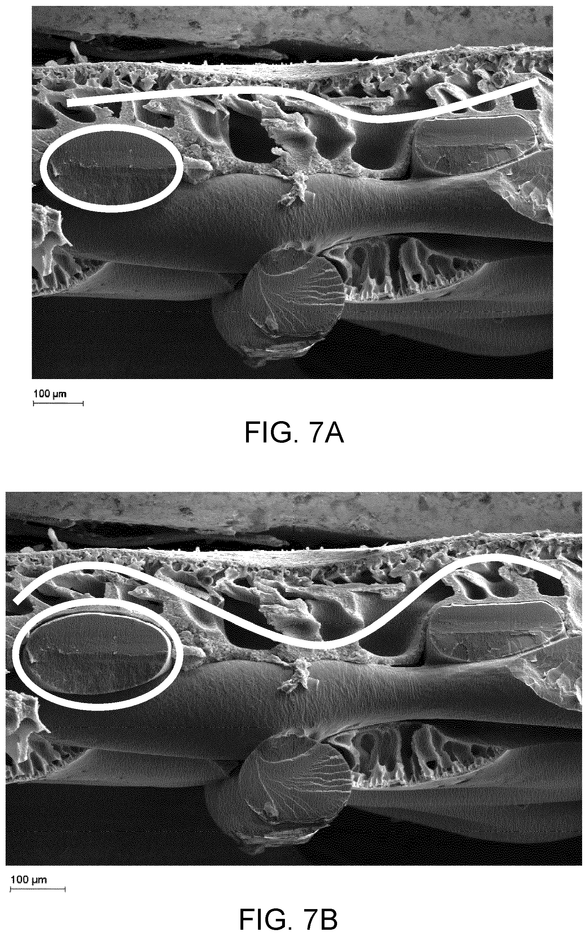

Additionally or alternatively, a surface area of the membrane composite may be selected based on predetermined properties of the interlaced strands. The properties may include thickness of the strands, distance between strands, or strand morphology, e.g., whether the strand is round, trilobal, triangular, multimodal or hollow fiber. In particular, the thickness of each undercoating strand, where present, may have an effect on the surface area of the polymeric coating. For example, a larger diameter of the undercoating strand may cause a wavy surface of the polymeric coating, thereby increasing the surface area for wastewater filtration. This is illustrated in FIG. 7A and FIG. 7B, showing a larger diameter of an undercoating strand in FIG. 7B, and a smaller diameter of an undercoating strand in FIG. 7A (indicated as white circles, circling a diameter of the respective undercoating strand). In line with the above, there is more surface of the undercoating in FIG. 7B for the polymeric coating to coat, and thus the polymeric coating of FIG. 7B has a larger surface area, than that illustrated in FIG. 7A (indicated as white wavy line).

During the 3D printing process, the strands may be printed to have a desired pattern, which may produce improved pore geometries. Such improved pore geometries may, for example, be determined in a simulation. Additionally or alternatively, by modifying the temperature of the 3D printing step, different stages of polymer crystallization of the 3D-printed structure can be achieved, which may facilitate customization of the membrane composite's performance and the properties of the material.

The polymeric coating solution may be allowed to form a polymeric coating by a phase inversion. Such a phase inversion may be a process of controlled polymer transformation from a liquid phase to solid phase. The phase inversion may be carried out, for example by precipitation from vapor phase, precipitation by controlled evaporation, thermally induced phase separation, immersion precipitation, or a combination thereof. In one embodiment, the phase inversion may be carried out by immersion precipitation, optionally in combination with solvent evaporation before the immersion and thermally induced phase separation.

Additionally, before coating the interstitial spaces of the first plurality of interlaced strands with the polymeric coating solution, an undercoating may be 3D-printed and included in the at least two 3D-printed layers. The addition of the undercoating to the at least two 3D-printed layers may improve the pressure stability of the membrane composite by increasing the bond between the at least two 3D-printed layers and the polymeric coating. In particular, the undercoating may improve adhesion by increasing a surface area between the first plurality of interlaced strands and the polymeric coating. In these embodiments, and as detailed further above, the undercoating may be 3D-printed in a similar pattern as the first plurality of interlaced strands. The coating may then be coated on the undercoating to substantially encapsulate the undercoating on the first plurality of interlaced strands, which discourages delamination.

The 3D-printed structure obtained from the first printing step may include the at least two 3D-printed layers, the 3D-printed spacer, optionally the at least one 3D-printed permeate outlet and optionally the at least one 3D-printed shock absorber discussed above and may be printed in a single operation.

The properties of the membrane composite and the choice of printing parameters presented above are intended to be exemplary for the membrane composite. It will be apparent to those ordinary skilled practitioners that the foregoing process operations may be modified without departing from the spirit of the present disclosure.

The term "comprising" shall be understood to have a broad meaning similar to the term "including" and will be understood to imply the inclusion of a stated integer or operation or group of integers or operations but not the exclusion of any other integer or operation or group of integers or operations. This definition also applies to variations on the term "comprising" such as "comprise" and "comprises".

By "about" in relation to a given numerical value, such as for thickness and height, it is meant to include numerical values within 10% of the specified value.

While the present disclosure has been particularly shown and described with reference to specific aspects, it should be understood by those skilled in the art that various changes in form and detail may be made therein without departing from the spirit and scope of the present disclosure as defined by the appended claims. The scope of the present disclosure is thus indicated by the appended claims and all changes which come within the meaning and range of equivalency of the claims are therefore intended to be embraced.

## Claims

1. A membrane composite (100) comprising:
at least two 3D-printed layers (110) extending in an x-y plane and comprising a first plurality of interlaced strands (120) forming a first plurality of interstitial spaces (122) defined by first inner surfaces (120s) of the interlaced strands; and
a polymeric coating coated on a surface of the at least two 3D-printed layers (110); and
on the first inner surfaces (120s) of the first plurality of interstitial spaces (122) to form pores,
wherein the polymeric coating is adapted for wastewater filtration.

2. The membrane composite (100) of claim 1, wherein a distance *d₁* between two adjacent strands of a layer of the at least two 3D-printed layers (110) is about 0.025 mm to about 1 mm.

3. The membrane composite (100) of any of the preceding claims, wherein
strands of a first 3D-printed layer (120a) of the at least two 3D-printed layers (110) is in parallel alignment and extend in a first direction of the x-y plane, and
strands of a second 3D-printed layer (120b) of the at least two 3D-printed layers (110) is in parallel alignment and extend in a second direction of the x-y plane, and
wherein the first 3D-printed layer (120a) is stacked on the second 3D-printed layer (120b) in a z-direction, and
the first direction and the second direction are at an angle of greater than 0 and less than 180 degrees to each other.

4. The membrane composite (100) of claim 3, wherein the at least two 3D-printed layers (110) comprise a third 3D-printed layer comprising strands in parallel alignment and stacked on the second 3D-printed layer (120b) in the z-direction, wherein the third 3D-printed layer extends in the first direction of the x-y plane and wherein the third 3D-printed layer is offset from the first 3D-printed layer (120a).

5. The membrane composite (100) of claim 4, wherein the first plurality of interstitial spaces (122) comprises interstitial spaces formed by the first 3D-printed layer (120a) and the second 3D-printed layer (120b) which are diagonally shifted from interstitial spaces formed by the second 3D-printed layer (120b) and the third 3D-printed layer, thereby creating a diagonally shifted pore pattern.

6. The membrane composite (100) of any of the preceding claims, wherein the at least two 3D-printed layers (110) further comprise an undercoating disposed between the first plurality of interlaced strands (120) and the polymeric coating.

7. The membrane composite (200) of any of the preceding claims, wherein the membrane composite (200) comprises a further at least two 3D-printed layers (214) comprising a first plurality of interlaced strands forming a first plurality of interstitial spaces, wherein the further at least two 3D-printed layers (214) are in a substantially parallel arrangement to the at least two 3D-printed layers (212),
wherein the membrane composite (200) further comprises a 3D-printed spacer (230) disposed between the at least two 3D-printed two layers (212) and the further at least two 3D-printed layers (214), wherein the 3D-printed spacer (230) comprises a second plurality of interlaced strands (240) forming a second plurality of interstitial spaces (245) defined by second inner surfaces (240s) of the interlaced strands (240), wherein a distance *d₂* between two adjacent strands of the 3D-printed spacer (230) is larger than a distance *d₁* between two adjacent strands of a layer of the at least two 3D-printed layers (212) or the further at least two 3D-printed layers (214).

8. The membrane composite (500) of claim 7, further having at least one through-hole (560) extending perpendicularly to the x-y plane, and wherein the membrane composite (500) further comprises at least one 3D-printed shock absorber (570) connecting the at least two 3D-printed layers (512, 514) around edges (565) partially defining the through-hole (560) to secure the substantially parallel arrangement between the at least two 3D-printed layers (512, 514).

9. The membrane composite (400) of any of the preceding claims, further comprising at least one 3D-printed permeate outlet (450) extending perpendicularly to the x-y plane and configured to conduct cleaned water out of the membrane composite.

10. The membrane composite (100, 200, 300, 400, 500) of any of the preceding claims 7 to 9, wherein the at least two 3D-printed layers (110, 212, 214, 310, 410, 512, 514) and the 3D-printed spacer (230, 330) and, if present, the at least one 3D-printed shock absorber (570) and, if present, the at least one 3D-printed permeate outlet (450) are formed in a single printing operation.

11. The membrane composite (100, 200, 300, 400, 500) of any of the preceding claims, wherein a material of the first plurality of interlaced strands (120) or, if present, a material of the 3D-printed spacer (230, 330) or, if present, the at least one 3D-printed shock absorber (570) comprises a polyester; and a material of the polymeric coating comprises a polysulfone.

12. A method (600) of producing a membrane composite, the method comprising
a first step of 3D printing a 3D-printed structure, wherein the 3D-printed structure comprises at least two layers comprising a first plurality of interlaced strands forming a first plurality of interstitial spaces defined by first inner surfaces of the interlaced strands (601); and
a second step of coating a surface of the 3D-printed structure and the first inner surfaces of the first plurality of interstitial spaces with a polymeric coating solution and allowing the polymeric coating solution to form a polymeric coating comprising a plurality of pores, wherein the polymeric coating is adapted for wastewater filtration (602).

13. The method (600) of claim 12, wherein the 3D printing comprises fuse deposition modeling.

14. The method (600) of claim 12 or claim 13, wherein
i) the 3D printing comprises selecting a distance between two adjacent strands of a layer based on predetermined data selected from properties of the polymeric coating solution, parameters of the second step of coating, or combinations thereof; and/or
ii) the 3D printing comprises selecting a surface area of the membrane composite based on predetermined properties of the interlaced strands.

15. The method (600) of claim 14, wherein the distance between two strands of the layer is selected to be about 0.025 mm to about 1 mm when the viscosity of the polymeric coating solution is in a range of about 1000 to 1500 mPas.
